# EUROPÄISCHE PATENTSCHRIFT

(11) **EP 0 823 371 B1**
(45) Veröffentlichungstag und Bekanntmachung des Hinweises auf die Patenterteilung: **02.11.2000**
(21) Anmeldenummer: 97112108.2
(22) Anmeldetag: 16.07.1997
(51) Int. Cl.: B62D 65/00

(54) **Verfahren zum optionalen Einbringen eines Durchbruches in die Aussenhaut einer Fahrzeugkarosserie**
Method for the optional making of an aperture into the outer skin of a vehicle
Méthode pour la mise en place optionnelle d'une ouverture dans le panneau extérieur d'une carrosserie d'un véhicule

(30) Priorität: 01.08.1996 DE 19630898
(43) Veröffentlichungstag der Anmeldung: 11.02.1998
(73) Patentinhaber: DaimlerChrysler AG, 70567 Stuttgart (DE)
(72) Erfinder: Braun, Karl-Heinz, 76831 Billigheim-Ingenheim (DE)

(56) Entgegenhaltungen:
- DE-B- 2 822 447
- US-A- 4 445 264

## Beschreibung

Die Erfindung betrifft ein Verfahren zum optionalen Einbringen eines Durchbruches in die Außenhaut einer Fahrzeugkarosserie nach dem Oberbegriff des Patentanspruchs 1.

Bei beispielsweise Nutzfahrzeugen sollen auf dem Fahrerhaus unterschiedliche Dachaufbauten wie unter anderem Außensonnenblenden, Windabweiser, Signalhörner, Positionsleuchten, Reklameschilder oder dergleichen montierbar sein, die häufig erst nach der Produktion des Fahrzeuges auf Wunsch eines Fahrzeuginhabers angebaut werden. Bei der Produktion eines Fahrzeuges sollen die Möglichkeiten für derartige Nachrüstungen bereits weitgehendst vorbereitet sein. So werden in vielen Fällen an den für Nachrüstungen in Frage kommenden Karosseriestellen bereits Befestigungsmuttern an der Innenseite der Karosserie-Außenhaut vorinstalliert. In solchen Fällen war es bisher üblich, die betreffenden Außenhaut-Durchbrüche bereits bei der Fahrzeugproduktion vorzusehen und nachträglich mit funktionslosen Verschlußschrauben zu verschließen.

Von einem solchen Stand der Technik ausgehend beschäftigt sich die Erfindung mit dem Problem, eine rationeller herstellbare und optisch gefälligere Abdeckung an unterhalb einer Karosserie-Außenhaut vorinstallierten Befestigungsstellen zu schaffen.

Eine überraschend einfache Lösung dieses Problemes zeigt ein Herstellungsverfahren mit den kennzeichnenden Merkmalen des Patentanspruchs 1 auf.

Eine vorteilhafte Ausgestaltung ist Gegenstand des Unteranspruches.

Das erfindungsgemäße Verfahren weist insbesondere folgende Vorteile auf.
- Bei der Herstellung der Außenwand einer Fahrzeugkarosserie ist praktisch kein Mehraufwand für das Vorbereiten optional anzubringender Durchbrüche erforderlich. Es brauchen beispielsweise keine Verschlußschrauben in zunächst nicht benötigte optional vorgesehene Karosserie-Durchbrüche eingesetzt und dicht mit der Außenhaut der Karosserie verbunden zu werden.
- Die erfindungsgemäß vorgesehenen Ausstülpungen an optional vorgesehenen Durchbruchstellen besitzen ein gefälliges Aussehen und stören das Karosserie-Design in nur äußerst geringem Maße und zwar insbesondere im Vergleich zu den bisher üblichen Verschlußschrauben.
- Das erfindungsgemäß vorgesehene bedarfsweise Absägen einer Ausstülpung ist einfacher und materialschonender möglich als ein Öffnen optional vorgesehener Durchbruchstellen durch Bohren oder Schleifen. Denn ein in die Fahrzeugkarosserie eindringender Bohrer kann leicht innenliegende Befestigungsteile wie beispielsweise eine Anschweißmutter beschädigen. Bei einem Schleifen kann im Falle einer nachträglichen Anbringung bei einem bereits lackierten Fahrerhaus durch die Wärementwicklung der Lack der Karosserie beschädigt werden und der angrenzende Außenhautbereich sich thermisch verziehen.
- Es sind keine Spezialwerkzeuge mit bestimmten Werkzeugabmessungen wie bei Bohrern notwendig. Auch sind keine Zusatzwerkzeuge wie beispielsweise Bohrschablonen für die Führung eines Bohrers erforderlich. Im Vergleich zu dem Anbringen eines Durchbruches durch einen Bohrer ist bei einem Absägen einer erfindungsgemäßen Ausstülpung ferner kein Entgraten erforderlich.
- Bei Karosserieteilen mit optional vorzusehenden Durchbrüchen ist keine Herstellung unterschiedlicher Bauteilvarianten erforderlich, da lediglich ein Bauteil mit sämtlichen möglichen vorinstallierten Durchbruchstellen herstellbar ist.

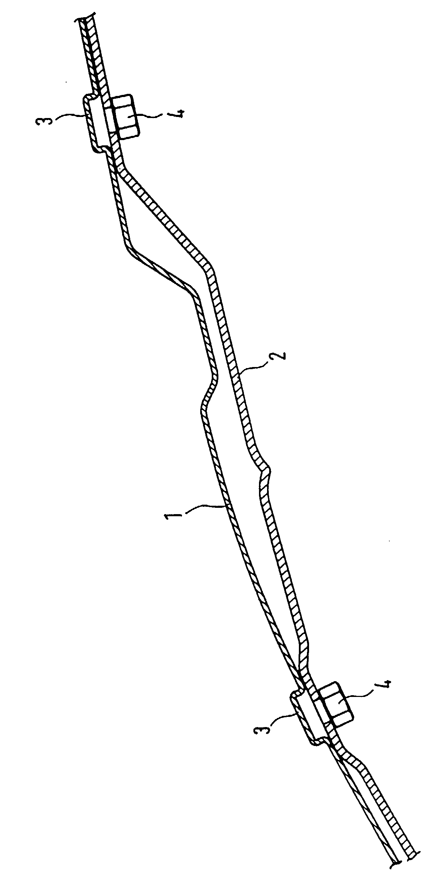

Ein Ausführungsbeispiel der Erfindung ist in der Zeichnung dargestellt, die einen Schnitt durch einen Abschnitt der Außenhaut des Daches einer Fahrerhauskarosserie eines Nutzfahrzeuges zeigt.

Das Fahrzeugdach besteht aus einer Verbundkonstruktion tiefgezogener Bleche, von denen eines die Außenhaut 1 und das andere eine stützenden Innenhaut 2 bildet.

In der Außenhaut 1 sind an optional vorgesehenen Durchbruchstellen Ausstülpungen 3 in das Blech eingeformt. Unterhalb der Ausstülpungen 3 sind in der Innenhaut 2 bereits Durchbrüche vorgesehen, an denen Aufschweißmuttern 4 angebracht sind.

Das nachträgliche Öffnen der Ausstülpungen 3 erfolgt in der Regel während der Rohbauphase, d.h. bei einer noch unlackierten Karosserie und wird mit einem Sägeblatt oder mit einer Sägescheibe durchgeführt, wobei das Sägeblatt bzw. die Sägescheibe in einem geringen Abstand parallel zu der Außenhaut 1 mit der Ausstülpung 3 zu führen ist. Um einen definierten Abstand gegenüber der eine Ausstülpung 3 umgebenden Oberfläche der Außenhaut 1 beim Absägen einer Ausstülpung 3 vorgeben und einhalten zu können, besitzt das Sägewerkzeug einen entsprechenden Anschlag, mit dem es auf die Außenhaut 1 aufgesetzt und auf dieser beim Absägen geführt werden kann.

## Patentansprüche

1. Verfahren zum optionalen Einbringen eines Durchbruches in die Außenhaut einer Fahrzeugkarosserie, der ein Durchgangsloch für eine Befestigungsschraube, einen Antennenstab oder dergleichen sein kann,
**dadurch gekennzeichnet**,
daß in die Außenhaut (1) an der für den optionalen Durchbruch vorgesehenen Stelle eine nach außen gerichtete noppen- oder hutartige Ausstülpung (3) eingeformt wird, die nach Lage, Größe und Querschnittsform dem vorzusehenden Durchbruch entspricht und daß die Ausstülpung (3) danach bedarfsweise von der Außenseite her mit einem parallel zur Außenhaut (1) und in dichtem Abstand zu ihr geführten Sägeschritt abgesägt wird.

2. Verfahren nach Anspruch 1,
**dadurch gekennzeichnet**,
daß das Einformen der Ausstülpung (3) bis etwa zu einer Tiefe erfolgt, welche dem Dreifachen der Dicke der Außenhaut (1) entspricht.

## Claims

1. A method of optionally providing an aperture in the exterior panelling of a vehicle body, which may be a hole for a fixing screw, an antenna or similar,
**characterised in that**
at the point on the exterior panelling (1) provided for the optional orifice, an outwardly directed nub- or cap-shaped protuberance (3) is formed, the position, size and shape of cross section thereof corresponding to that of the orifice to be provided, and in that the protuberance (3) is then sawn off from the outside with a saw cut guided parallel with the exterior panelling (1) and at a tight distance relative thereto.

2. A method as claimed in claim 1,
**characterised in that**
the impression of the protuberance (3) is formed to a depth corresponding to three times the thickness of the exterior panelling (1).

## Revendications

1. Procédé d'aménagement optionnel d'une ouverture dans la peau extérieure d'une carrosserie de véhicule, pouvant être un trou de passage pour une vis de fixation, une tige d'antenne ou analogue,
caractérisé en ce que, dans la peau extérieure (1), à l'emplacement prévu pour l'ouverture optionnelle, est creusé une protubérance (3) du genre d'un bouton ou d'un chapeau, tournée vers l'extérieur qui, selon la position, la taille et la forme de section transversale, correspond à l'ouverture à prévoir, et en ce que la protubérance (3), ensuite, en cas de besoin, est découpée par sciage de la face extérieure, avec une découpure de sciage guidée parallèlement à la peau extérieure (1) et à faible distance de celle-ci.

2. Procédé selon la revendication 1,
caractérisé en ce que le façonnage de la protubérance (3) s'effectue jusqu'à à peu près une profondeur qui correspond au triple de l'épaisseur de la peau extérieure (1).
